# EUROPEAN PATENT APPLICATION

(11) **EP 4 438 679 A1**
(43) Date of publication of application: **02.10.2024**
(21) Application number: 22898230.2
(22) Date of filing: 30.09.2022
(51) Int. Cl.: C08L 57/00, C08K 3/013, C08K 3/30

(54) **THERMOPLASTIC RESIN COMPOSITION AND MOLDED ARTICLE USING SAME**

(30) Priority: 26.11.2021 JP 2021192426
(71) Applicant: Toray Industries, Inc., Tokyo 103-8666 (JP)
(72) Inventor: UEDA, Takashi, Ichihara-shi, Chiba 299-0196 (JP); SATO, Daisuke, Ichihara-shi, Chiba 299-0196 (JP); TAKASAKI, Tadakatsu, Ichihara-shi, Chiba 299-0196 (JP)
(74) Representative: Mewburn Ellis LLP
(86) International application number: PCT/JP2022/036713
(87) International publication number: WO 2023/095445

(57) **Abstract**

The present invention relates to a thermoplastic resin composition that includes 100 parts by mass of a vinyl copolymer (I) that has a refractive index of 1.50-2.00, 2-3 parts by mass of inorganic particles (II-1) that have a particle diameter (D50) of 1.2-2.8 µm, and 1-7 parts by mass of inorganic particles (II-2) that have a particle diameter (D50) of 3.6-6.4 µm, there being a total of 4-10 parts by mass of the inorganic particles, and the ratio (II-2)/(II-1) of inorganic particles (II-2) to inorganic particles (II-1) being at least 0.3 but less than 4.0.

## Description

### TECHNICAL FIELD

The present invention relates to a thermoplastic resin composition having a light diffusion property and a light permeability, and relates to a molded article using the thermoplastic resin composition.

### BACKGROUND ART

A transparent thermoplastic resin has a light permeability, and thus is widely used in fields such as electricity, electronics, OA, and automatic vehicles. In each field, resins satisfying required performances are selected and appropriately used.

In particular, in applications such as an illumination apparatus cover, switches of various devices, a direct type and an edge light type unit of a liquid crystal television, and automatic vehicle interior and exterior design components, when a transparent thermoplastic resin is used, a light source is seen through because the light is transmitted therethrough. Therefore, there is a demand for a material to which a light diffusion property is imparted so that a shape of the light source behind a resin molded article is not recognized and luminance of the light source is not impaired as much as possible.

Examples of the transparent thermoplastic resin include an acrylic resin, a polycarbonate, and a methyl methacrylate-methacrylic acid-styrene copolymer resin. For the purpose of imparting light diffusion properties to these resins, inorganic particles such as calcium carbonate and barium sulfate, and organic particles such as acrylic polymer particles and siloxane polymer particles have been mixed to these resins by alone or in combination (for example, Patent Literatures 1 to 3).

### CITATION LIST

### PATENT LITERATURE

Patent Literature 1: JP2015-158625A
Patent Literature 2: JP2009-126997A
Patent Literature 3: JP2006-335973A

### SUMMARY OF INVENTION

### TECHNICAL PROBLEM

However, a material using an acrylic resin has a high water-absorbing property, and thus warpage of a molded article under an actual use environment has become a problem. In addition, in a material using a polycarbonate resin, in a secondary processing such as two-color molding or film insert molding, an appearance failure occurs due to melting of a primary side material or displacement of a film due to high-temperature molding, and thus a processing method or a condition is limited.

It has been difficult to achieve an enhanced demand for optical characteristics (light diffusion property and light permeability) only by the related art.

Therefore, an object of the present invention is to provide a thermoplastic resin composition having more advanced optical characteristics without limiting a use environment or a secondary processing method, and to provide a molded article using the thermoplastic resin composition.

### SOLUTION TO PROBLEM

As a result of intensive studies to solve the above problems, the present inventors have found that a thermoplastic resin composition having more advanced optical characteristics without limiting a use environment or a secondary processing method can be obtained by blending two kinds of inorganic particles having different particle diameters (D50) in a vinyl copolymer in a specific composition, and have reached the present invention.

That is, the present invention includes the following (1) to (7).
(1) A thermoplastic resin composition including: 100 parts by mass of a vinyl copolymer (I) that has a refractive index of 1.50 to 2.00; 2 to 3 parts by mass of inorganic particles (II-1) that have a particle diameter (D50) of 1.2 µm to 2.8 µm; and 1 to 7 parts by mass of inorganic particles (II-2) that have a particle diameter (D50) of 3.6 µm to 6.4 µm, in which a total content of the inorganic particles (II-1) and the inorganic particles (II-2) is 4 to 10 parts by mass, and a blending ratio (II-2)/(II-1) of the inorganic particles (II-1) to the inorganic particles (II-2) is 0.3 or more and less than 4.0.
(2) The thermoplastic resin composition according to (1), in which the inorganic particles have a refractive index of 1.50 to 2.00.
(3) The thermoplastic resin composition according to (1) or (2), in which the thermoplastic resin composition has a total light transmittance of 55.0% to 65.0% and a haze of 95% to 100%.
(4) The thermoplastic resin composition according to any one of (1) to (3), in which the thermoplastic resin composition has a density of 1100 kg/m³ to 1140 kg/m³.
(5) The thermoplastic resin composition according to any one of (1) to (4), in which the inorganic particles contain barium sulfate.
(6) The thermoplastic resin composition according to any one of (1) to (5), in which the vinyl copolymer (I) has a weight average molecular weight of 80,000 to 150,000.
(7) A molded article obtained by molding the thermoplastic resin composition according to any one of (1) to (6).

### ADVANTAGEOUS EFFECTS OF INVENTION

According to the present invention, it is possible to provide a transparent material that has more advanced optical characteristics and can be widely used without limiting a use environment or a secondary processing method.

### DESCRIPTION OF EMBODIMENTS

Hereinafter, a thermoplastic resin composition of the present invention and a molded article thereof will be specifically described.

### [Vinyl Copolymer (I)]

The vinyl copolymer (I) used in the present invention is preferably a vinyl copolymer obtained by copolymerizing at least one of an aromatic vinyl monomer (A) and a vinyl cyanide monomer (B). It is preferred to copolymerize the aromatic vinyl monomer (A), which improves moldability. It is preferred to copolymerize the vinyl cyanide monomer (B), which improves toughness and chemical resistance.

As a ratio of monomers in the copolymerization, the aromatic vinyl monomer (A) is preferably 60% by mass or more and 100% by mass or less and the vinyl cyanide monomer (B) is preferably 0% by mass or more and 40% by mass or less. The aromatic vinyl monomer (A) is more preferably 60% by mass or more and 80% by mass or less and the vinyl cyanide monomer (B) is more preferably 20% by mass or more and 40% by mass or less. The aromatic vinyl monomer (A) is further preferably 65% by mass or more and 80% by mass or less and the vinyl cyanide monomer (B) is further preferably 20% by mass or more and 35% by mass or less.

In the case where the aromatic vinyl monomer (A) is 60% by mass or more, fluidity tends to be improved, which is preferable. In addition, in the case where the aromatic vinyl monomer (A) is 80% by mass or less, mechanical strength tends to be improved, which is preferable.

Examples of the aromatic vinyl monomer (A) include styrene, α-methylstyrene, vinyl toluene, o-ethylstyrene, p-methylstyrene, m-methylstyrene, t-butyl styrene, vinyl toluene, chlorostyrene, and bromostyrene. The preferred is styrene. These monomers do not necessarily have to be used alone, and can also be used in combination. Of these, the particularly preferred is styrene.

Examples of the vinyl cyanide monomer (B) include acrylonitrile, methacrylonitrile, and ethacrylonitrile, and the particularly preferred is acrylonitrile. These monomers do not necessarily have to be used alone, and can also be used in combination.

In the vinyl copolymer (I), other vinyl monomers copolymerizable with the aromatic vinyl monomer (A) and the vinyl cyanide monomer (B) may be used to the extent that effects of the present invention are not lost. Specific examples of other vinyl monomers include N-phenylmaleimide, N-methylmaleimide, and methyl methacrylate, which can be selected depending on purposes thereof, and these monomers can be used alone or in combination. In order to further improve heat resistance or flame retardance, the preferred is N-phenylmaleimide. In addition, when importance is placed on improving hardness, the preferred is methyl methacrylate.

The refractive index of the vinyl copolymer (I) used in the present invention is within a range of 1.50 or more and 2.00 or less. The refractive index is preferably in a range of 1.50 or more and 1.70 or less, and more preferably in a range of 1.50 or more and 1.60 or less. In the case where the refractive index of the vinyl copolymer (I) is less than 1.50 or more than 2.00, a sufficient light diffusion property may not be obtained in the molded article of the thermoplastic resin composition.

Here, the refractive index of the vinyl copolymer (I) means a refractive index measured in accordance with JIS K 7142 (2014).

A weight average molecular weight of the vinyl copolymer (I) is preferably 150,000 or less, more preferably 140,000 or less, and further preferably 130,000 or less from the viewpoint of fluidity. In particular, a lower limit of the weight average molecular weight is preferably 80,000 or more from the viewpoint of impact resistance.

Here, the weight average molecular weight of the vinyl copolymer (I) refers to a polystyrene equivalent value measured by gel permeation chromatography (GPC). A measurement method is as described in Examples to be described later.

Examples of the vinyl copolymer (I) include an acrylonitrile-styrene copolymer (AS resin), a methyl methacrylate-acrylonitrile-styrene copolymer (MAS resin), a methyl methacrylate-styrene copolymer (MS resin), and a styrene copolymer (PS resin). Of these, the preferred is the acrylonitrile-styrene copolymer (AS resin).

In the present invention, a method of preparing the vinyl copolymer (I) is not particularly limited, and bulk polymerization, suspension polymerization, bulk suspension polymerization, solution polymerization, emulsion polymerization, precipitation polymerization, and combinations thereof are used. A method used for charging a monomer is also not particularly limited, and the monomer may be charged at once in an initial stage, or may be charged in several increments to promote or prevent the formation of the compositional distribution of the copolymer, to perform polymerization.

In the present invention, suitable initiators used for the polymerization of the vinyl copolymer (I) are a peroxide, an azo compound, and the like, and these initiators may be used alone or in combination.

Examples of the peroxide include benzoyl peroxide, cumene hydroperoxide, dicumyl peroxide, diisopropylbenzene hydroperoxide, t-butyl hydroperoxide, t-butylcumyl peroxide, t-butyl peroxyacetate, t-butylperoxy benzoate, t-butyl peroxyisopropyl carbonate, di-t-butyl peroxide, t-butyl peroctate, 1,1-bis(t-butylperoxy) 3,3,5-trimethylcyclohexane, 1,1-bis(t-butylperoxy) cyclohexane, and t-butylperoxy-2-ethylhexanoate. These peroxides may be used in combination of two or more. Of these, the preferred are cumene hydroperoxide and 1,1-bis(t-butylperoxy) 3,3,5-trimethylcyclohexane.

Examples of the azo compound include azobisisobutyronitrile, azobis(2,4 dimethylvaleronitrile), 2-phenylazo-2,4-dimethyl-4-methoxyvaleronitrile, 2-cyano-2-propylazoformamide, 1,1'-azobiscyclohexane-1-carbonitrile, azobis(4-methoxy-2,4-dimethylvaleronitrile), dimethyl 2,2'-azobisisobutylate, 1-t-butylazo-1-cyanocyclohexane, 2-t-butylazo-2-cyanobutane, and 2-t-butylazo-2-cyano-4-methoxy-4-methylpentane. These peroxides may be used in combination of two or more. Of these, the preferred is azobisisobutyronitrile.

In the polymerization, a chain transfer agent such as a mercaptan or a terpene may be used for the purpose of adjusting a degree of polymerization. Specific examples of the chain transfer agent include n-octylmercaptan, t-dodecylmercaptan, n-dodecylmercaptan, n-tetradecylmercaptan, n-octadecylmercaptan, and terpinolene. Of these, the preferred are n-octylmercaptan, t-dodecylmercaptan, and n-dodecylmercaptan. These chain transfer agents may be used either alone or in combination of two or more.

### [Inorganic Particles (II)]

The inorganic particles (II) contained in the thermoplastic resin composition of the present invention are used in combination of two kinds having different particle diameters (D50). In order to balance a light diffusion property and a light permeability at a high level, the particle diameter (D50) of inorganic particles (II-1) is in a range of 1.2 µm or more and 2.8 µm or less, preferably in a range of 1.4 µm or more and 2.6 µm or less, and more preferably in a range of 1.4 µm or more and 2.4 µm or less. The particle diameter (D50) of inorganic particles (II-2) is 3.6 µm or more and 6.4 µm or less, preferably 3.8 µm or more and 6.2 µm or less, and more preferably 4.0 µm or more and 6.0 µm or less. In the case where the particle diameters (D50) of the inorganic particles (II) are out of the above ranges, the balance between the light diffusion property and the light permeability is lost, leading to the occurrence of light shading (color unevenness) or the occurrence of a decrease in luminance.

The particle diameter of the inorganic particles (II) means a median diameter (D50).

The refractive index of the inorganic particles (II) for both the inorganic particles (II-1) and the inorganic particles (II-2) is preferably in a range of 1.50 or more and 2.00 or less, more preferably in a range of 1.50 or more and 1.80 or less, and further preferably in a range of 1.50 or more and 1.70 or less. In the case where the refractive index is 1.50 or more and 2.00 or less, the sufficient light diffusion property can be obtained in the molded article of the thermoplastic resin composition.

The refractive index of the inorganic particles (II) was cited from a literature (Chemical Dictionary published by Kyoritsu Shuppan Co., Ltd., July 31, 1962, First Edition, First Copy).

Specific examples of the inorganic particles (II) include barium sulfate, calcium carbonate, talc, mica, milled fiber, and kaolin. Among these inorganic particles (II), the preferred is barium sulfate from the viewpoint of light diffusion property and light permeability.

In the thermoplastic resin composition of the present invention, the content of the inorganic particles (II-1) of the inorganic particles (II) is 2 parts by mass or more and 3 parts by mass or less, and the content of the inorganic particles (II-2) of the inorganic particles (II) is 1 part by mass or more and 7 parts by mass or less with respect to 100 parts by mass of the vinyl copolymer (I). The content of the inorganic particles (II-2) is more preferably 2 parts by mass or more and 7 parts by mass or less, and further preferably 3 parts by mass or more and 7 parts by mass or less.

The blending ratio (II-2)/(II-1) of the inorganic particles is 0.3 or more and less than 4.0, preferably 1.0 or more and less than 4.0, and further preferably 1.5 or more and less than 4.0.

The total content of the inorganic particles (II-1) and the inorganic particles (II-2) is 4 parts by mass or more and 10 parts by mass or less, more preferably 5 parts by mass or more and 10 parts by mass or less, and further preferably 5 parts by mass or more and 9 parts by mass or less.

In the case where the content and the blending ratio of the inorganic particles (II) are within the above ranges, the thermoplastic resin composition and the molded article have an excellent balance between the light diffusion property and the light permeability, and it is possible to avoid the occurrence of color unevenness due to light shading or the occurrence of a decrease in luminance.

The thermoplastic resin composition of the present invention preferably has a total light transmittance of 55.0% or more and 65.0% or less, more preferably 57.0% or more and 63.0% or less, and further preferably 58.0% or more and 62.0% or less. In the case where the total light transmittance is 55.0% or more, a sufficient amount of light is obtained and the light permeability is good, and in the case where the total light transmittance is 65.0% or less, the light is transmitted uniformly and light intensity shading is less likely to occur, which is preferable.

The total light transmittance of the thermoplastic resin composition is measured in accordance with JIS K 7361-1 (1997) using a test piece having a thickness of 2 mm and molded by injection molding out of pellets obtained by melt-kneading the thermoplastic resin composition.

The thermoplastic resin composition of the present invention preferably has a haze of 95% or more and 100% or less, more preferably 96% or more and 100% or less, and further preferably 97% or more and 100% or less. In the case where the haze is 95% or more, the light diffusion property is good, which is preferable. The theoretical maximum value is 100%.

The haze of the thermoplastic resin composition is measured in accordance with JIS K 7136 (2000) using a test piece having a thickness of 2 mm and molded by injection molding out of pellets obtained by melt-kneading the thermoplastic resin composition.

The thermoplastic resin composition of the present invention preferably has a density of 1100 kg/m³ or more and 1140 kg/m³ or less. In the case where the density is 1100 kg/m³ or more, sufficient optical characteristics can be obtained, and in the case where the density is 1140 kg/m³ or less, it leads to weight reduction particularly when the thermoplastic resin composition is applied to a large molded article, which is preferable.

The density of the thermoplastic resin composition is measured in accordance with ISO1183 (2010) using a test piece type B2 cut out from a multi-purpose test piece type A1 (specified in JIS K 7139 (2009)) molded by injection molding out of pellets obtained by melt-kneading the thermoplastic resin composition.

The thermoplastic resin composition of the present invention may contain various additives as necessary in a range not adversely affecting the object of the present invention. Examples of the additives include antioxidants such as hindered phenol antioxidants, sulfur-containing compound antioxidants, and phosphorus-containing organic compound antioxidants, thermal antioxidants such as phenol antioxidants and acrylate antioxidants, ultraviolet absorbers such as benzotriazole absorbers, benzophenone absorbers, and succinate absorbers, molding aid such as a polymer or copolymer containing acrylic acid and its ester and methacrylic acid and its ester and modified polytetrafluoroethylene, flame retardants and flame retardant aids, antimicrobial agents as typically represented by silver antimicrobial agents, antimold agents, mold release agents, lubricants, pigments, and dyes.

The thermoplastic resin composition of the present invention can be obtained by melt-kneading constituent resin components and inorganic components. A method used for the melt kneading is not particularly limited, and exemplary methods include a method in which the melt kneading is conducted by a single or twin screw in a vented cylinder having a heater. A heating temperature in the melt kneading is typically selected from a range of 180°C to 250°C, and a temperature gradient or the like during melt kneading may be freely set in a range not adversely affecting the object of the present invention. In the case where a twin screw is used, a rotational direction may be the same or different. The screw may be either an intermeshed or non-intermeshed screw.

A molding method for preparing a molded article by using the thermoplastic resin composition of the present invention is not particularly limited, and the molded article is suitably molded by, for example, injection molding. The injection molding may be conducted in a temperature range typically used in the molding of a thermoplastic resin which is preferably in a range of 210°C to 250°C. The mold temperature used in the injection molding is a temperature range typically used in the molding which is preferably in a range of 30°C to 80°C.

In the thermoplastic resin composition of the present invention, the vinyl copolymer is a main component of the resin, and thus it is possible to reduce warpage due to moisture absorption and appearance failure at the time of secondary processing in the molded article. Therefore, the thermoplastic resin composition of the present invention can be suitably applied to molded articles using various decoration methods, regardless of a use environment.

In addition, the thermoplastic resin composition of the present invention contains inorganic particles having different particle diameters in a specific amount and at a specific ratio, and thus both the light permeability and the light diffusion property can be achieved at a high level in the molded article.

That is, the resin composition of the present invention can be suitably used for components that require light diffusion properties, such as electric and electronic applications, OA appliances, building and construction materials applications, and automatic vehicle interior and exterior applications.

### Examples

The present invention is described in further detail by referring to the following Examples which by no means limit the scope of the present invention, and various modifications may be conducted.

### (1) Particle Diameter (D50)

A particle size distribution was determined under the following measurement conditions, and a particle diameter at which a volume cumulative value from a small particle side was 50% of a total particle volume was defined as the particle diameter (D50).

Apparatus: laser diffraction and scattering type particle diameter distribution measuring apparatus (MT3300 manufactured by Nikkiso Co., Ltd.)

### Solvent: 0.2% by mass of a sodium hexametaphosphate aqueous solution

Dispersion conditions in the apparatus: irradiation at 40W for 6 minutes in the apparatus

### (2) Optical characteristics (light permeability): total light transmittance

The total light transmittance was measured in accordance with JIS K 7361-1 (1997) using a test piece having a size of 80 mm × 80 mm × 2 mm and molded out of pellets obtained in each of Examples and Comparative Examples by using an injection molding machine in which a cylinder temperature was set to 230°C and a mold temperature was set to 60°C.

### (3) Optical characteristics (light diffusion property): haze

The haze was measured in accordance with JIS K 7136 (2000) using the same test piece as in the measurement of the total light transmittance.

### (4) Fluidity: melt flow rate

The melt flow rate of the pellets obtained in each of Examples and Comparative Examples was measured in accordance with ISO1133 (2011 version) under conditions of a temperature of 220°C and a load of 10 kg.

### (5) Density

The density was measured in accordance with ISO1183 (2010) using a test piece type B2 cut out from a multi-purpose test piece type A1 (defined in JIS K 7139 (2009)) molded out of the pellets obtained in each of Examples and Comparative Examples by using an injection molding machine in which a cylinder temperature was set to 230°C and a mold temperature was set to 60°C.

### (6) Impact resistance: charpy impact strength

The charpy impact strength was measured in accordance with ISO 179/1 eA (2010) using the test piece type B2 cut out from the multi-purpose test piece type A1 molded under the same conditions as in the density.

### (7) Heat resistance: deflection temperature under load

The measurement was performed in accordance with ISO75-2 (2013) (measured under 1.8MPa conditions) using the test piece type B2 cut out from the multi-purpose test piece type A1 molded under the same conditions as in the density.

### (8) Refractive Index of Vinyl Copolymer

Each of the vinyl copolymers (I-1) and (I-2) obtained as described later was vacuum-dried at 80°C for 3 hours, and then a film-shaped sample having a thickness of about 40 µm was prepared by using a hot press set at 220°C. The refractive index was measured in accordance with JIS K 7142 (2014) using the film-shaped sample as a sample by using an Abbe refractometer. The measurement temperature was 23°C.

### (9) Refractive Index of Inorganic Particles

The refractive index of the inorganic particles was cited from the literature (Chemical Dictionary published by Kyoritsu Shuppan Co., Ltd., July 31, 1962, First Edition, First Copy).

### (10) Weight Average Molecular Weight

About 0.03 g of each of the vinyl copolymers (I-1) and (I-2) obtained as described later was weighed and dissolved in about 15 g of tetrahydrofuran to obtain a solution of about 0.2% by mass. The weight average molecular weight was determined by a GPC chromatogram using the solution, in terms of polystyrene as a standard substance. The GPC measurement was performed under the following conditions.
·Equipment: Waters 2695
·Column temperature: 40°C
·Detector: RI2414 (differential refractometer)
·Flow rate of Carrier Eluent: 0.3 ml/min (solvent: tetrahydrofuran)
·Column: TSKgel Super HZM-M (6.0 mm I.D. × 15 cm)
TSKgel Super HZM-N (6.0 mm I.D. × 15 cm)

In series (all manufactured by Tosoh Corporation).
·Standard sample: monodisperse polystyrene manufactured by Tosoh Corporation.

### <Preparation of Vinyl Copolymer (I-1)>

A slurry obtained by suspension polymerization of a monomer mixture containing 72% by mass of styrene and 28% by mass of acrylonitrile was subjected to washing, dehydration, and drying processes to prepare a vinyl copolymer (I) having a weight average molecular weight of 100, 000 and a refractive index of 1.57.

### <Preparation of Vinyl Copolymer (I-2)>

A slurry obtained by suspension polymerization of a monomer mixture containing 72% by mass of methyl methacrylate, 24% by mass of styrene, and 4% by mass of acrylonitrile was subjected to washing, dehydration, and drying processes to prepare a vinyl copolymer (I) having a weight average molecular weight of 110, 000, and a refractive index of 1.52.

### <Inorganic Particles (II)>

·Inorganic particles (II-1): barium sulfate, particle diameter (D50) of 2 µm, refractive index of 1.64
·Inorganic particles (II-2): barium sulfate, particle diameter (D50) of 5 µm, refractive index of 1.64

### <Other Additives (III)>

·Phosphorus heat stabilizer: trade name "ADK STAB PEP-36", manufactured by ADEKA Corporation

### (Examples 1 to 10 and Comparative Examples 1 to 8)

The vinyl copolymer (I), the inorganic particles (II), and other additives were blended at a mass ratio shown in the following tables, and the mixture was melt-kneaded in a twin-screw extruder (temperature range: 200°C to 220°C) having a screw diameter of 30 mm and rotating in the same direction to obtain pellets. The obtained pellets were evaluated as described above. Evaluation results are shown in Tables 1 and 2 below.

A total light transmittance of 55.0% to 65.0% is good. A haze of 95% to 100% is good.

### [Table 1]

**Table 1**

| Items | Unit | Ex. 1 | Ex. 2 | Ex. 3 | Ex. 4 | Ex. 5 |
|---|---|---|---|---|---|---|
| Vinyl copolymer (I-1) | Part by mass | 100 | 100 | 100 | 100 | 100 |
| Vinyl copolymer (I-2) | Part by mass | - | - | - | - | - |
| Inorganic particles (II-1) D50: 2 µm | Part by mass | 3 | 3 | 3 | 2 | 2 |
| Inorganic particles (II-2) D50: 5 µm | Part by mass | 1 | 2 | 3 | 3 | 4 |
| Other additives | Part by mass | 0.1 | 0.1 | 0.1 | 0.1 | 0.1 |
| Total content of inorganic particles (II) | Part by mass | 4.0 | 5.0 | 6.0 | 5.0 | 6.0 |
| Inorganic particles (II-2)/inorganic particles (II-1) | - | 0.3 | 0.7 | 1.0 | 1.5 | 2.0 |
| Total light transmittance | % | 61.3 | 59.0 | 57.2 | 63.9 | 61.5 |
| Haze | % | 96.2 | 97.3 | 98.5 | 98.3 | 99.1 |
| MFR | g/10 min | 54 | 54 | 54 | 55 | 55 |
| Density | kg/m³ | 1105 | 1113 | 1119 | 1112 | 1120 |
| Charpy impact strength | kJ/m² | 1.3 | 1.3 | 1.3 | 1.2 | 1.2 |
| Deflection temperature under load | °C | 91 | 91 | 91 | 90 | 90 |

**Table 1 Continued**

| Items | Unit | Ex. 6 | Ex. 7 | Ex. 8 | Ex. 9 | Ex. 10 |
|---|---|---|---|---|---|---|
| Vinyl copolymer (I-1) | Part by mass | 100 | 100 | 100 | 100 | - |
| Vinyl copolymer (I-2) | Part by mass | - | - | - | - | 100 |
| Inorganic particles (II-1) D50: 2 µm | Part by mass | 2 | 2 | 2 | 2.5 | 2 |
| Inorganic particles (II-2) D50: 5 µm | Part by mass | 5 | 6 | 7 | 6 | 5 |
| Other additives | Part by mass | 0.1 | 0.1 | 0.1 | 0.1 | 0.1 |
| Total content of inorganic particles (II) | Part by mass | 7.0 | 8.0 | 9.0 | 8.5 | 7.0 |
| Inorganic particles (II-2)/inorganic particles (II-1) | - | 2.5 | 3.0 | 3.5 | 2.4 | 2.5 |
| Total light transmittance | % | 60.7 | 60.0 | 59.1 | 58.3 | 62.0 |
| Haze | % | 99.2 | 99.4 | 99.5 | 99.5 | 99.0 |
| MFR | g/10 min | 56 | 57 | 58 | 58 | 35 |
| Density | kg/m³ | 1125 | 1127 | 1130 | 1130 | 1198 |
| Charpy impact strength | kJ/m² | 1.2 | 1.3 | 1.2 | 1.3 | 1.0 |
| Deflection temperature under load | °C | 91 | 90 | 90 | 90 | 83 |

### [Table 2]

**Table 2**

| Items | Unit | Comp. Ex. 1 | Comp. Ex. 2 | Comp. Ex. 3 | Comp. Ex. 4 |
|---|---|---|---|---|---|
| Vinyl copolymer (I-1) | Part by mass | 100 | 100 | 100 | 100 |
| Vinyl copolymer (I-2) | Part by mass | - | - | - | - |
| Inorganic particles (II-1) D50: 2 µm | Part by mass | 4 | 5 | - | - |
| Inorganic particles (II-2) D50: 5 µm | Part by mass | - | - | 4 | 6 |
| Other additives | Part by mass | 0.1 | 0.1 | 0.1 | 0.1 |
| Total content of inorganic particles (II) | Part by mass | 4.0 | 5.0 | 4.0 | 6.0 |
| Inorganic particles (II-2)/inorganic particles (II-1) | - | 0.0 | 0.0 | - | - |
| Total light transmittance | % | 54.9 | 52.2 | 79.5 | 72.6 |
| Haze | % | 97.8 | 99.3 | 97.1 | 98.5 |
| MFR | g/10 min | 54 | 55 | 54 | 55 |
| Density | kg/m³ | 1105 | 1113 | 1105 | 1120 |
| Charpy impact strength | kJ/m² | 1.2 | 1.2 | 1.2 | 1.2 |
| Deflection temperature under load | °C | 90 | 91 | 90 | 90 |

**Table 2 (Continued)**

| Items | Unit | Comp. Ex. 5 | Comp. Ex. 6 | Comp. Ex. 7 | Comp. Ex. 8 |
|---|---|---|---|---|---|
| Vinyl copolymer (I-1) | Part by mass | 100 | 100 | 100 | 100 |
| Vinyl copolymer (I-2) | Part by mass | - | - | - | - |
| Inorganic particles (II-1) D50: 2 µm | Part by mass | - | - | 1 | 1 |
| Inorganic particles (II-2) D50: 5 µm | Part by mass | 7 | 10 | 4 | 5 |
| Other additives | Part by mass | 0.1 | 0.1 | 0.1 | 0.1 |
| Total content of inorganic particles (II) | Part by mass | 7.0 | 10.0 | 5.0 | 6.0 |
| Inorganic particles (II-2)/inorganic particles (II-1) | - | - | - | 4.0 | 5.0 |
| Total light transmittance | % | 68.9 | 65.3 | 68.4 | 65.2 |
| Haze | % | 99.0 | 99.3 | 98.2 | 99.0 |
| MFR | g/10 min | 56 | 58 | 56 | 56 |
| Density | kg/m³ | 1126 | 1142 | 1112 | 1121 |
| Charpy impact strength | kJ/m² | 1.2 | 1.3 | 1.2 | 1.2 |
| Deflection temperature under load | °C | 91 | 90 | 90 | 90 |

It is understood that the thermoplastic resin compositions of Examples 1 to 10 are excellent in balance between the total light transmittance and the haze and have sufficient optical characteristics. On the other hand, it is understood that the thermoplastic resin compositions of Comparative Examples 1 to 8 containing the inorganic particles (II) in a range out of a specified value of the present invention do not obtain sufficient optical characteristics.

Although the present invention has been described in detail with reference to specific embodiments, it is apparent to those skilled in the art that various changes and modifications can be made without departing from the spirit and the scope of the present invention. The present application is based on a Japanese patent application (No. 2021-192426) filed on November 26, 2021, and the contents thereof are incorporated herein by reference.

### INDUSTRIAL APPLICABILITY

The present invention is a thermoplastic resin composition capable of obtaining more advanced optical characteristics, and can be suitably used for general applications that require light diffusion properties, such as switches and decoration panels in OA equipment, lighting equipment such as a ceiling light cover, a downlight shade, and a pendant light shade, a direct type and an edge light type unit of liquid crystal television, optical decoration portions or switches of home electric appliance main bodies such as a refrigerator, an air conditioner, a washing machine, and a rice cooker in home electric appliances, a decoration panel and a guide display plate in a construction materials relation, and automatic vehicle exterior components such as a radiator grille, an emblem, a garnish, a door mirror, a roof, a fender, and a bumper and automatic vehicle interior components such as a power panel, a center console, a center cluster, a lever controller, and a console box in the field of automatic vehicles.

## Claims

1. A thermoplastic resin composition comprising:
100 parts by mass of a vinyl copolymer (I) that has a refractive index of 1.50 to 2.00;
2 to 3 parts by mass of inorganic particles (II-1) that have a particle diameter (D50) of 1.2 µm to 2.8 µm; and
1 to 7 parts by mass of inorganic particles (II-2) that have a particle diameter (D50) of 3.6 µm to 6.4 µm, wherein
a total content of the inorganic particles (II-1) and the inorganic particles (II-2) is 4 to 10 parts by mass, and
a blending ratio (II-2)/(II-1) of the inorganic particles (II-1) to the inorganic particles (II-2) is 0.3 or more and less than 4.0.

2. The thermoplastic resin composition according to claim 1, wherein
the inorganic particles (II-1) and the inorganic particles (II-2) have a refractive index of 1.50 to 2.00.

3. The thermoplastic resin composition according to claim 1 or 2, wherein
the thermoplastic resin composition has a total light transmittance of 55.0% to 65.0% and a haze of 95% to 100%.

4. The thermoplastic resin composition according to any one of claims 1 to 3, wherein
the thermoplastic resin composition has a density of 1100 kg/m³ to 1140 kg/m³.

5. The thermoplastic resin composition according to any one of claims 1 to 4, wherein
the inorganic particles contain barium sulfate.

6. The thermoplastic resin composition according to any one of claims 1 to 5, wherein
the vinyl copolymer (I) has a weight average molecular weight of 80,000 to 150,000.

7. A molded article obtained by molding the thermoplastic resin composition according to any one of claims 1 to 6.
